# EUROPÄISCHE PATENTSCHRIFT

(11) **EP 0 870 140 B1**
(45) Veröffentlichungstag und Bekanntmachung des Hinweises auf die Patenterteilung: **01.12.1999**
(21) Anmeldenummer: 95929757.3
(22) Anmeldetag: 05.09.1995
(51) Int. Cl.: F16K 17/04

(54) **SICHERHEITSVENTIL, INSBESONDERE DRUCKENTLASTUNGSVENTIL UND DRUCKABSICHERUNGSVENTIL**
SAFETY VALVE, IN PARTICULAR ONE DESIGNED AS A PRESSURE-RELIEF AND PROTECTION VALVE
SOUPAPE DE SECURITE, NOTAMMENT SOUPAPE DE DETENTE ET SOUPAPE DE SURPRESSION

(30) Priorität: 13.09.1994 DE 4432578
(43) Veröffentlichungstag der Anmeldung: 14.10.1998
(73) Patentinhaber: SIEMENS AKTIENGESELLSCHAFT, 80333 München (DE)
(72) Erfinder: CONRADS, Hermann-Josef, D-91074 Herzogenaurach (DE); LAURER, Erwin, D-91096 Möhrendorf (DE); MODEL, Jürgen, D-91056 Erlangen (DE); PREISS, Ulrich, D-91056 Erlangen (DE)
(86) Internationale Anmeldenummer: DE9501205
(87) Internationale Veröffentlichungsnummer: WO9608667

(56) Entgegenhaltungen:
- DE-C- 597 161
- GB-A- 820 897
- GB-A- 1 080 063
- US-A- 3 194 260

## Beschreibung

Die Erfindung betrifft ein Sicherheitsventil, insbesondere in einer Druckarmatur als Druckentlastungs-Tandemventil für einen Druckbehälter oder kombiniertes Druckentlastungs- und Druckabsicherungs-Tandemventil, sowie ein Verfahren zum Betrieb des Sicherheitsventils zur Druckentlastung.

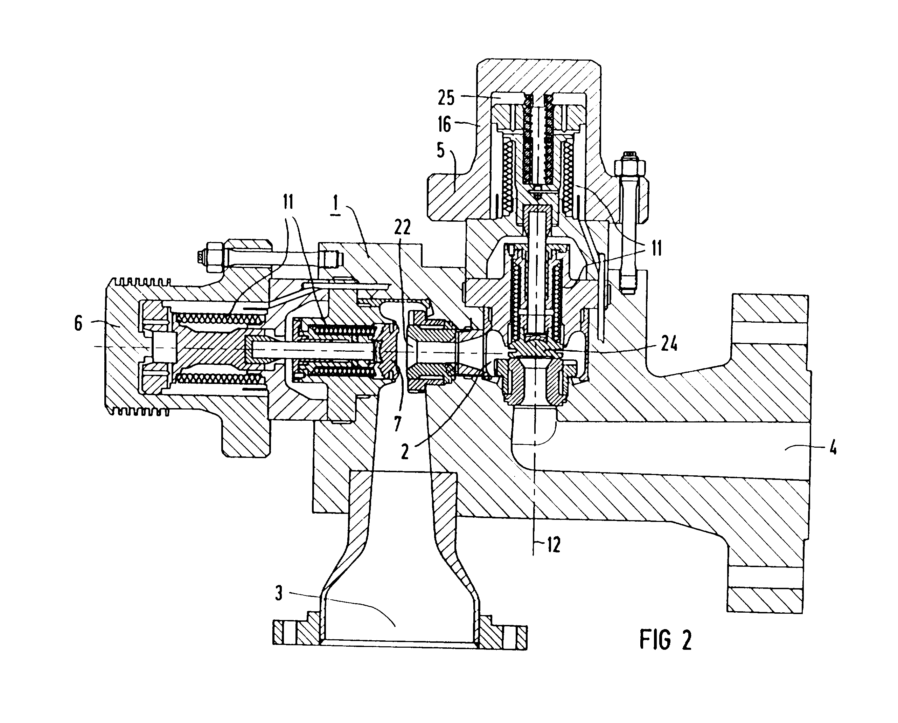

Ein gattungsgemäßes Sicherheitsventil gemäß den Merkmalen vom Oberbegriff des Anspruchs 1 ist in Figur 2 offenbart.

In sämtlichen Gebieten der Technik, in denen Behältnisse oder Leitungen unter Druck stehen, finden Druckarmaturen, insbesondere zur Druckentlastung und zur Drucksteuerung, Anwendung. Eine Druckentlastung oder eine Drucksteuerung kann dabei sowohl während eines normalen Betriebes als auch zur Sicherheit einer Anlage mit unter Druck stehenden Komponenten erfolgen. Insbesondere Druckbehälter sind nach bestehenden technischen Regeln häufig gegen Überdruck abzusichern. Darüber hinaus ist bei einem Druckbehälter, insbesondere einem Dampfkessel, die Möglichkeit einer, auch von Hand einzuleitenden, Druckentlastung gefordert. Durch eine rechtzeitige und ausreichende Druckentlastung kann eine Durchführung flexibler Sicherheitsmaßnahmen verbessert werden. Dies ist insbesondere bei einem Kernkraftwerk mit einem unter Druck stehenden Primärsystem, welches zu schützende Komponenten, wie den Reaktorkern aufweist, von Vorteil. Eine Druckentlastung eines Druckbehälters, der unter einem hohen Innendruck steht, beispielsweise einem Kernreaktor-Druckbehälter mit einem Innendruck von etwa 150 bar, auf einen Druck der Größenordnung eines Umgebungsdruckes von beispielsweise 2 bis 4 bar oder auf einen drucklosen Zustand muß je nach Auslegungsbedingung vorgesehen sein.

Eigenmediumbetätigte Druckentlastungsventile können konstruktionsbedingt bei einer Druckentlastung eines unter einem hohen Druck stehenden Systems, beispielsweise 150 bar, frühzeitig zu einem Wiederschließen führen. Dieses Wiederschließen wird beispielsweise über das Eigengewicht von in vertikaler Richtung beweglichen Ventileinbauten bewirkt, oder zusätzlich durch eine Ventilfeder, eine sogenannte Vakuumfeder, unterstützt. Diese Vakuumfeder kann die Aufgabe, das Druckentlastungsventil auch bei einem Anliegen eines Unterdrucks, beispielsweise von 1 bar, geschlossen zu halten haben. Bei einem Öffnen eines solchen Druckentlastungsventils wird die Vakuumfeder komprimiert, so daß sie in Schließrichtung auf die beweglichen Ventileinbauten eine zusätzliche Kraft ausübt. Dies ist insbesondere bei als Tandemventil ausgeführten Druckarmaturen der Fall, die gleichzeitig einer Druckentlastung und einer Druckabsicherung dienen. Weiterhin kann bei Druckentlastungsventilen auf die beweglichen Ventileinbauten ein Gegendruck in Richtung der Schließposition ausgeübt werden, welcher beispielsweise von einem Abblasebehälter erzeugt wird, der an das Druckentlastungsventil angeschlossen ist. Je höher dieser Gegendruck ist, desto größer ist die Schließbereitschaft des Druckentlastungsventils. Hierdurch können Druckentlastungsventile für eine Druckentlastung eines Reaktordruckbehälters bis zu einem Druck von etwa 9 bar geöffnet bleiben. Ab diesem Druck muß eine Kühlung des Reaktorkerns über andere Sicherheitsvorrichtungen erfolgen.

Die GB-PS 199,541 sowie die GB-PS 808,577 betreffen jeweils ein Sicherheitsventil zur Absicherung eines unter erhöhtem Druck stehenden hydraulischen Systems, so daß bei Überschreiten eines kritischen Druckes über das Sicherheitsventil ein Druckabbau durchgeführt werden kann. In beiden Patentschriften besteht die konstruktive Ausgestaltung des Sicherheitsventils darin, daß ein Arretierungselement entlang einer Achse senkrecht zur Hubrichtung des Ventilkolbens des Sicherheitsventils verschiebbar ist und eine Arretierung des Ventilkegels in einer das Sicherheitsventil öffnenden Stellung erreichbar ist. In der GB-PS 808,577 ist das Arretierungselement eine Kugel, welche über einen durch eine Feder vorgespannten Kolben in eine Nut des Ventilkolbens gedrückt wird. Der die Kugel verschiebene Kolben kann durch eine manuell zu bedienende Vorrichtung sowie gegebenenfalls durch eine elektromagnetische Vorrichtung in seine Ausgangslage zurückgebracht werden. Die Anordnung mit dem als Kugel ausgebildeten Arretierungselement ist auf alle Fälle immer so ausgeführt, daß bei jedem Öffnen des Sicherheitsventils dieses automatisch offen gehalten wird. Das in der GB-PS 199,541 beschriebene Arretierungselement weist zwei an gegengesetzten Seiten eines Ventilkolbens angeordnete Stifte auf, die in eine jeweilige in den Ventilkolben verlaufende Nut eingreifen können. Die Stifte sind über eine vorgespannte Feder gegen den Ventilkolben gedrückt, so daß mit dem Ventilkolben ein Kraftschluß besteht, der eine Bewegung des Kolbens entlang seiner Hubrichtung behindert. Ist der Druck in dem hydraulischen System so groß, daß sowohl die Reibkraft der Stifte als auch die Kraft der Schließfeder überwunden wird, wird der Kolben in Hubrichtung bewegt. Sobald die jeweiligen Nuten in dem Ventilkolben die Höhe der Stifte erreicht haben, werden diese automatisch von außen nicht steuerbar, in die Nuten gedrückt. Hierdurch wird eine Arretierung des Ventilkolbens in einer das Ventil öffnenden Position erreicht. Die Vorspannung der Federn der Stifte kann so reguliert werden, daß bei unterschiedlichen Systemdrücken ein erneutes Schließen des Ventils infolge der Schließkraft der Ventilfedern erreicht wird. Die Arretierungselemente sind in beiden Patentschriften ausschließlich entlang einer Achse senkrecht zur Hubrichtung des Ventilkolbens bewegbar und werden durch eine vorgespannte Feder ohne die Möglichkeit einer Steuerung von außen bei jedem Öffnen des Ventils in eine den Ventilkolben arretierende Stellung gebracht.

Aufgabe der Erfindung ist es, ein Sicherheitsventil anzugeben, welches selbst bei einem geringen Druck und in einem drucklosen Zustand in einer geöffneten Position haltbar ist.

Eine weitere Aufgabe der Erfindung besteht in der Angabe eines Verfahrens zum Betrieb eines derartigen Sicherheitsventils.

Erfindungsgemäß wird die erstgenannte Aufgabe durch ein Sicherheitsventil gemäß den Merkmalen von Anspruch 1 gelöst.

Das Sicherheitsventil arbeitet nach dem Entlastungsprinzip und hat einen Steuerzylinder, in dem ein Druck aufbringbar ist, so daß das Schließorgan den Strömungskanal verschließt. Der Druck ist reduzierbar, wodurch eine den Strömungskanal öffnende Bewegung des Schließorgans erzeugbar ist. Die Offenhaltevorrichtung ist auf dem Steuerzylinder angeordnet, wobei die Kolbenstange innerhalb des Steuerzylinders geführt ist und mit ihrem Ende aus diesem herausragt. Ein Offenhalten eines nach dem Entlastungsprinzip arbeitenden Sicherheitsventils selbst bis zu einem drucklosen Zustand hin wird hierdurch sicher erreicht. Vorzugsweise wird zur Nachrüstung oder Neukonstruktion eines Sicherheitsventils eine Kolbenstange eingefügt oder so weit verlängert, daß sie von einer aufgesetzten Offenhaltevorrichtung gefaßt werden kann. Durch entsprechende Verbindungskanäle zwischen dem Steuerzylinder und der Offenhaltevorrichtung bleibt das Volumen eines Steuerraums des Steuerzylinders gleich, so daß sämtliche Eigenschaften, insbesondere dynamische Eigenschaften, des Sicherheitsventils erhalten bleiben. Die funktionsrelevanten Dimensionen des Sicherheitsventils bleiben daher erhalten, so daß von neuen Funktionsnachweisen abgesehen werden kann.

Mit der Offenhaltevorrichtung ist gewährleistet, daß der Strömungskanal selbst bis zu einem drucklosen Zustand offenhaltbar ist. Dies ist besonders für eine vollständige Druckentlastung eines Druckbehälters, beispielsweise eines Kernreaktordruckbehälters, von besonderem Vorteil. Durch ein Lösen der Greifvorrichtung ist es ebenfalls gewährleistet, daß der Strömungskanal jederzeit wieder verschließbar ist. Das Sicherheitsventil erfüllt somit die Anforderungen eines Druckentlastungs- und/oder Druckabsicherungsventils. Das Sicherheitsventil kann dabei als Schließorgan einen Ventilkegel, der unmittelbar mit der Kolbenstange fest verbunden ist, oder einen Ventilteller aufweisen, der mit einem Hochdruckbalg druckdicht verbunden ist und mit der Kolbenstange in Verbindung steht. Die Verbindung zwischen Ventilteller und Kolbenstange kann hydraulisch sein, wobei in einem drucklosen Zustand die Federwirkung des Hochdruckbalgs des Ventiltellers zumindest eine Teiloffenhaltung des Strömungskanals gewährleistet.

Bevorzugt hat die Greifvorrichtung zumindest eine Fangklinke, welche in der Umgebung des dem Strömungskanal abgewandten Endes der Kolbenstange eingreift und diese damit in einer den Strömungskanal offenhaltenden Position hält. Die Fangklinke ist mechanisch stabil und konstruktiv einfach ausführbar, wodurch ein hohes Maß an Funktionssicherheit gegeben ist.

Die Fangklinke ist vorzugsweise senkrecht zur Hauptachse um einen Winkel von bis zu 20°, insbesondere bis zu 15°, schwenkbar, wodurch ein langer Steuerungsweg der Fangklinke vermieden und eine einfache Bewegbarkeit der Fangklinke mittels beispielsweise eines Schaltnockens ermöglicht ist.

Vorzugsweise erfolgt eine Verschiebung der Fangklinke über eine verschiebliche Spindel, die entlang der Hauptachse bewegbar ist. Durch eine Verschiebung der Spindel in Richtung des Strömungskanals erfolgt eine Bewegung der Fangklinke in eine Offenposition, d.h. in eine Position, in der die Kolbenstange an ihrem Ende nicht gefaßt wird. Bei einer Verschiebung der Spindel weg von dem Strömungskanal wird die Fangklinke in die Fangposition bewegt, wodurch ein Fassen der Kolbenstange ermöglicht ist. Die Spindel hat vorzugsweise einen Schaltnocken, der sich ständig zwischen einem oberen und einem unteren Vorsprung der Fangklinke befindet und wobei eine Belastung des oberen bzw. unteren Vorsprungs durch den Schaltnocken zu einer Schwenkbewegung der Fangklinke in eine Auf- bzw. Zustellung erfolgt. Durch einen Antrieb der Spindel erfolgt unabhängig von einem in dem Sicherheitsventil anliegenden Druck fremdmediumgesteuert eine Schwenkbewegung der Fangklinke und damit ein Offenhalten oder Verschließen des Strömungskanals. Eine Druckentlastung durch das Sicherheitsventil kann daher fremdmediumbetrieben selbst bis zu einem drucklosen Zustand erfolgen.

Zum Eingreifen der Fangklinke hat das dem Strömungskanal abgewandte Ende der Kolbenstange bevorzugt eine Einbuchtung. Das Ende der Kolbenstange ist vorzugsweise in Form eines Greifkopfes ausgebildet, welchen die Fangklinke umgreifen kann und gegen eine Bewegung in Richtung des Strömungskanals sichert. Der Greifkopf ist konisch ausgebildet mit einer Verjüngung in Richtung des Strömungskanals, wodurch nach Einsetzen einer Hubbewegung der Kolbenstange ein zwischen der Fangklinke und der Kolbenstange bestehender Reibkraftschluß graduel verringert oder vollständig zum Verschwinden gebracht wird.

Die Offenhaltevorrichtung weist bevorzugt einen zeitabhängig schaltbaren Antrieb zum Öffnen und Schließen der Greifvorrichtung, insbesondere zum Schwenken einer Fangklinke, auf. Die zeitabhängige Abschaltung des Antriebs erfolgt insbesondere nachdem die von ihm angetriebenen Funktionselemente, beispielsweise die Spindel oder die Fangklinke, gegen einen vorgegebenen Anschlag bewegt wurden und beispielsweise ein Elektromotor des Antriebs über sein Kippmoment zum Stillstand gekommen ist. Die zeitabhängige Abschaltung des Elektromotors kann für beide Drehrichtungen des Elektromotors erfolgen, d.h. sowohl bei einer die Greifvorrichtung öffnenden sowie schließenden Bewegung.

Bevorzugt ist das Sicherheitsventil in einer Druckarmatur mit einem zusätzlichen Ventil in Reihe angeordnet. Das zusätzliche Ventil hat einen zusätzlichen Strömungskanal, der in den Strömungskanal des Sicherheitsventils übergeht. Ist die Druckarmatur einerseits an einen Druckbehälter und andererseits an einen Abblasebehälter angeschlossen, so mündet vorzugsweise das Sicherheitsventil in den Abblasebehälter. Das zusätzliche Ventil hingegen ist mit dem Druckbehälter verbunden. Sollte bei einer Druckentlastung der Schließvorgang des Sicherheitsventils behindert sein, so erfolgt bei einer solchen Druckarmatur dennoch ein Schließen der Druckarmatur und damit eine Verminderung eines weiteren Druckabfalls in dem Druckbehälter, da bei einem sinkenden Druck das zusätzliche Ventil druckabhängig schließt. Dies ist beispielsweise bei einem Reaktordruckbehälter vorteilhaft, bei dem das zusätzliche Ventil beispielsweise bei einem Druck von 130 bar wieder schließt. Bei einem erneuten Druckanstieg, beispielsweise auf 140 bar, öffnet das zusätzliche Ventil erneut und übernimmt hierdurch eine Druckabsicherung des Reaktordruckbehälters.

Die Druckarmatur, welche beispielsweise ein Tandemventil ist, dessen Schließorgan ein über einen Hochdruckbalg bewegter Ventilteller ist, eignet sich bevorzugt als Druckentlastungs-Tandemventil für einen Druckbehälter eines Kernreaktors, insbesondere eines Druckwasserreaktors. Durch das Sicherheitsventil ist eine Druckentlastung des Druckbehälters bis auf einen drucklosen Zustand gewährleistet.

Die Druckarmatur mit dem Tandemventil ist ebenfalls besonders für eine kombinierte Druckentlastung und Druckabsicherung für einen Druckbehälter eines Kernreaktors, insbesondere eines Druckwasserreaktors, geeignet. Bei einer Druckentlastung können das Sicherheitsventil und das zusätzliche Ventil beispielsweise über fremdmediumgesteuerte Steuerventile geöffnet werden. Für eine Druckabsicherung ist bevorzugt ein eigenmediumbetätigtes Steuerventil, insbesondere ein federbelastetes Steuerventil, zum Öffnen des Sicherheitsventils und/oder des zusätzlichen Ventils vorgesehen. Das federbelastete Steuerventil wie auch ein motorgetriebenes Steuerventil können als Drei-Wege-Ventile ausgeführt sein. Bevorzugt ist das motorgetriebene Steuerventil zwischen dem eigenmediumbetriebenen Steuerventil und einem Steuerraum des Sicherheitsventils plaziert, wodurch eine Funktionsbehinderung der Steuerventile vermieden ist. Insbesondere wird dadurch vermieden, daß das motorgetriebene Steuerventil den Steuerraum entlastet und das federbetriebene Steuerventil den Steuerraum gleichzeitig mit Druck belastet.

Die als Tandemventil ausgeführte Druckarmatur eignet sich ebenfalls zur kombinierten Druckentlastung und Druckabsicherung eines Druckhalters eines Druckwasserreaktors. Diese kombinierte Funktionsausübung des Tandemventils bedeutet, daß bei einer Druckabsicherung der Druckbehälter gegen einen Überdruck gesichert ist, derart, daß das Ventil bei Überschreiten eines kritischen Druckes automatisch öffnet und bei Absinken des Druckes auf einen vorgegebenen Wert, beispielsweise den normalen Betriebsdruck, ebenfalls automatisch wieder schließt. Die Druckentlastung bedeutet die Absenkung des Druckes unterhalb des normalen Betriebsdruckes, beispielsweise auf den Wert des Umgebungsdruckes. Dies kann über entsprechende Stellmotoren und im Anschluß an ein Öffnen des Sicherheitsventils infolge eines Überdrucks durch ein Greifen und Arretieren des Ventilkolbens in einer öffnenden Position erreicht werden.

Erfindungsgemäß erfolgt eine Betätigung der Greifvorrichtung des Sicherheitsventils in einer Druckarmatur, die insbesondere als Tandemventil aufgebaut ist, derart, daß, falls das Sicherheitsventil und das zusätzliche Ventil gleichzeitig geöffnet sind, die Greifvorrichtung in eine Fangstellung bewegt wird, in der sie das Ende der Kolbenstange faßt und dadurch die Kolbenstange mit dem Schließorgan in einer den Strömungskanal offenhaltenden Position hält. Hierdurch ist eine Druckentlastung eines Druckbehälters, an den die Druckarmatur angeschlossen ist, bis in einen drucklosen Zustand ermöglicht. Die Greifvorrichtung ist dabei so ausgelegt, daß sie die Kolbenstange entgegen ihrem Eigengewicht, einer auf die Kolbenstange wirkenden Schließfederkraft und gegebenenfalls einem Gegendruck sicher festhält.

Anhand der Zeichnung wird das Sicherheitsventil mit Offenhaltevorrichtung, insbesondere in einer als Tandemventil ausgeführten Druckarmatur, sowie das Verfahren näher beschrieben. Es zeigen:
- FIG 1: eine Druckarmatur mit Sicherheitsventil in einer Seitenansicht,
- FIG 2: eine Druckarmatur gemäß dem Stand der Technik in einem Längsschnitt,
- FIG 3: Sicherheitsventil mit Offenhaltevorrichtung in einem Längsschnitt,
- FIG 4: einen vergrößerten Ausschnitt der Offenhaltevorrichtung nach FIG 3 mit geöffneter Greifvorrichtung und
- FIG 5: einen vergrößerten Ausschnitt der Offenhaltvorrichtung nach FIG 3 mit geschlossener Greifvorrichtung.

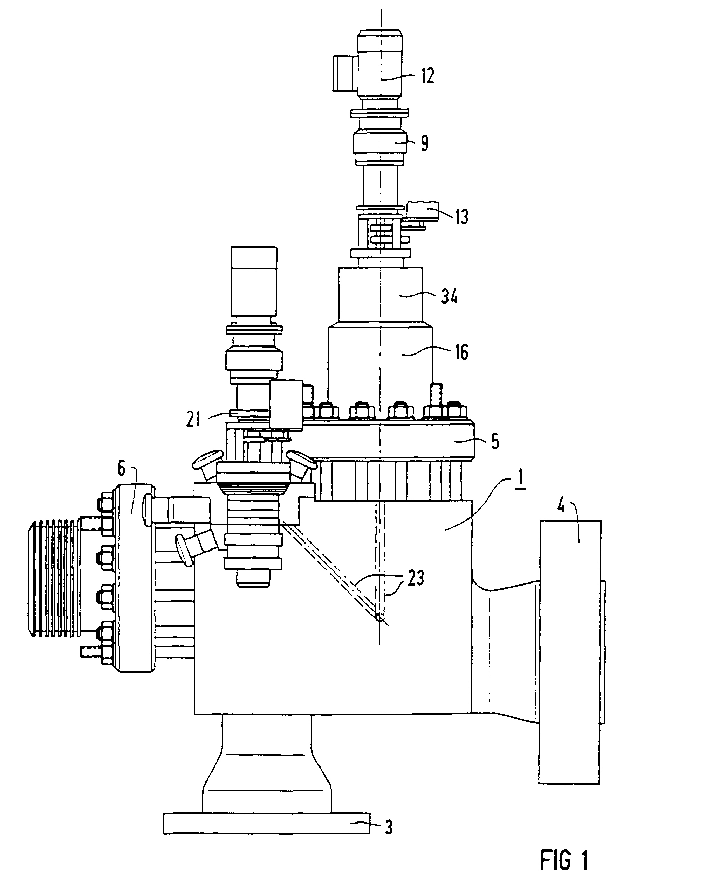

FIG 1 zeigt in einer Seitenansicht ein Sicherheitsventil 5 in einer Druckarmatur 1, welches entlang einer Hauptachse 12 gestreckt ist und einen Steuerzylinder 16 aufweist, auf den eine Offenhaltevorrichtung 9 aufgesetzt ist. Die Druckarmatur 1 hat einen Strömungseinlaß 4 und einen Strömungsauslaß 3. Zwischen dem Strömungseinlaß 4 und dem Strömungsauslaß 3 sind das Sicherheitsventil 5 und ein zusätzliches Ventil 6 in Reihe angeordnet. Das zusätzliche Ventil 6 ist um 90° gedreht gegenüber dem Sicherheitsventil 5 angeordnet und mit dem Strömungsauslaß 3 verbunden. Das Sicherheitsventil 5 ist mit dem Strömungseinlaß 4 verbunden. Die Druckarmatur 1 weist zudem zumindest ein motorbetriebenes Steuerventil 21 auf, welches über Steuerleitungen 23 mit der Druckarmatur 1, insbesondere mit dem Sicherheitsventil 5, verbunden ist. Das motorgetriebene Steuerventil 21 dient der Steuerung des nach dem Entlastungsprinzip arbeitenden Sicherheitsventils 5 zur Druckentlastung eines nicht dargestellten Druckbehälters, welcher an dem Strömungseinlaß 4 angeordnet ist.

FIG 2 zeigt eine Druckarmatur 1 des Standes der Technik in einem Längsschnitt, die als Tandemventil ausgebildet ist und bis auf die Offenhaltevorrichtung 9 der Druckarmatur 1 gemäß FIG 1 im wesentlichen entspricht. Das Sicherheitsventil 5 sowie das zusätzliche Ventil 6 weisen jeweils ein Schließorgan 7 auf, welches ein Ventilteller 24 ist, der mit einem Hochdruckbalg 11 dichtend verbunden und über diesen bewegbar ist. Das gegenüber dem Sicherheitsventil 5 um 90° gedrehte zusätzliche Ventil 6 hat einen zusätzlichen Strömungskanal 22, der den Strömungskanal 2 des Sicherheitsventils 5 mit dem Strömungsauslaß 3 verbindet. Der Steuerzylinder 16 des Sicherheitsventils 5 weist einen Steuerraum 25 auf, welcher im Normalfall mit einem unter Druck stehenden Medium gefüllt ist, wodurch der Hochdruckbalg 11 den Ventilteller 24 in einer den Strömungskanal 2 verschließenden Position hält. Der Normalfall liegt vor, wenn an dem Strömungseinlaß 4 ein unter Druck stehender nicht dargestellter Druckbehälter angeschlossen ist. In diesem Fall ist das zusätzliche Ventil 6 zumindest teilweise geöffnet, d.h. das Schließorgan 7, der Ventilteller 24, des zusätzlichen Ventils 6 ist in einer den zusätzlichen Strömungskanal 22 öffnenden Position. Das Sicherheitsventil 5 funktioniert beim Öffnen nach dem Entlastungsprinzip und beim Schließen nach dem Belastungsprinzip. Anstelle von Kolben und Kolbenringen weist das Sicherheitsventil 5 ausgesteifte Hochdruck-Faltenbälge 11 auf. Über einen Steuerkanal, über den beim Schließvorgang der Steuerraum 25 befüllt wird, findet auch dessen Entleerung zum Druckabbau beim Öffnungsvorgang statt. Bei einem Systemdruck unter 180 bar wird der Steuerraum 25 über ein nicht dargestelltes federbelastetes Steuerventil mit unter Druck stehendem Medium versorgt. Bei Einschalten des motorgetriebenen Steuerventils 21 wird die Versorgung über das federbelastete Steuerventil unterbunden und der Steuerraum 25 entlastet.

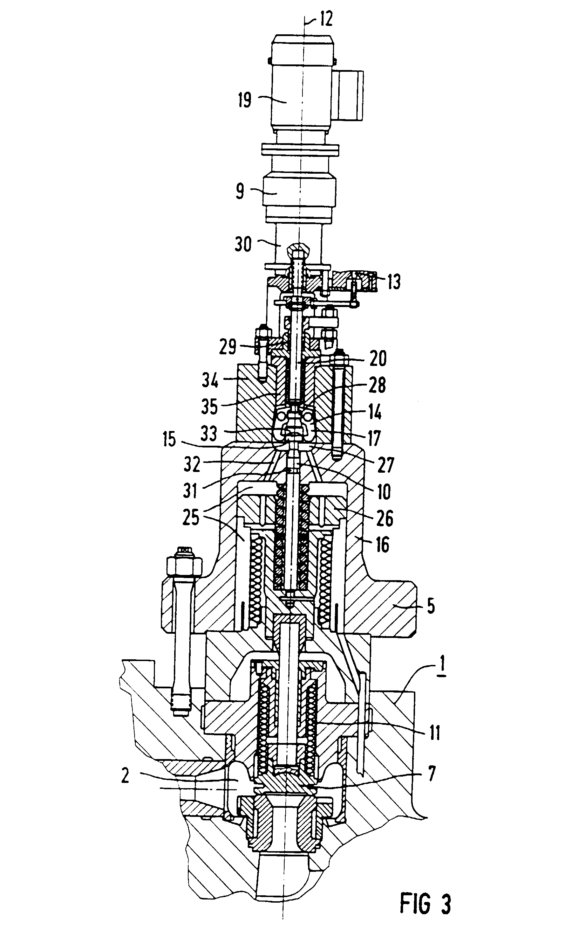

In FIG 3 ist das Sicherheitsventil 5 gemäß FIG 1 in einem Längsschnitt dargestellt. Bezugszeichen der FIG 1 und FIG 2 stimmen mit denen in FIG 3 überein. Auf den Steuerzylinder 16 ist entlang der Hauptachse 12 die Offenhaltvorrichtung 9 angeordnet. Innerhalb des Steuerzylinders 16 ist entlang der Hauptachse 12 eine Kolbenstange 10 angeordnet, die mit ihrem den Strömungskanal 2 entgegenliegendem Ende 15 aus dem Steuerzylinder 16 in die Offenhaltevorrichtung 9 hineinragt. Das Ende 15 ist so hinterdreht, daß es eine Art Greifkopf 33 bildet. Innerhalb des Steuerzylinders 16 ist ein mit der Kolbenstange 10 verbundener Kolben 26 angeordnet, welcher entlang der Hauptachse 12 beweglich ist und zwischen dem und der Offenhaltevorrichtung 9 ein Steuerraum 25 für ein unter Druck stehendes Medium gebildet ist. Von dem Steuerraum 25 führen Ausgleichsbohrungen 32 in einen Nebensteuerraum 27 der Offenhaltevorrichtung 9. Die Kolbenstange 10 ist durch den Steuerzylinder 16 mit einer Gleitführung 31 in die Offenhaltevorrichtung 9 hineingeführt. Oberhalb des Endes 15 der Kolbenstange 10 ist in der Offenhaltevorrichtung 9 eine Greifeinrichtung 14 mit drei Fangklinken 17 angeordnet, die jeweils um einen Winkel von 120° in einer Ebene senkrecht zur Hauptachse 12 angeordnet sind. Oberhalb des Endes 15 weist die Offenhaltevorrichtung 9 eine Spindel 20 auf, die entlang der Hauptachse 12 gestreckt ist und einen Schaltnocken 28 hat, der zwischen den Fangklinken 17 angeordnet ist. Die Fangklinken 17 sind über einen Einsatz 35, der mit einer Sicherheitsstopfbuchse 29 dichtend abgeschlossen ist, in ein Druckgehäuse 34 der Offenhaltevorrichtung 9 eingesetzt, welches die Offenhaltevorrichtung 9 mit dem Steuerzylinder 16 dichtend verbindet. Die entlang der Hauptachse 12 gestreckte Spindel 20 weist an ihrem dem Schaltnocken 28 entgegenliegenden Ende eine Spindelmutterbremse 30 auf und wird durch einen Antriebsmotor 19 entlang der Hauptachse 12 bewegt. Die Spindel 20 ist mit einer Stellungsanzeige 13 für die Klinkenstellung verbunden. Durch das in FIG 1 dargestellte motorgetriebene Steuerventil 21 ist eine aus dem Steuerzylinder 16 herausgerichtete Bewegung der Kolbenstange 10 ermöglicht, wodurch das Ende 15 der Kolbenstange 10 in die Offenhaltevorrichtung 9 so weit eindringt, daß es von der Greifvorrichtung 14 gefaßt werden kann. Über die Spindel 20 kann die Greifvorrichtung 14, insbesondere die Fangklinken 17, in eine das Ende 15 fassende Position geschwenkt werden, wodurch die Kolbenstange 10 festgehalten wird und das Schließorgan 7 in einer den Strömungskanal 2 zumindest teilweise offenhaltenden Position verbleibt. Das Schließorgan kann hierzu mechanisch mit dem Kolben 26 oder der Kolbenstange 10 verbunden sein, oder mit der Kolbenstange 10 über Steuerleitungen hydraulisch verbunden sein, wobei selbst in einem drucklosen Zustand die Federwirkung des Hochdruckbalgs 11 zumindest eine Teiloffenhaltung des Strömungskanals 2 gewährleistet.

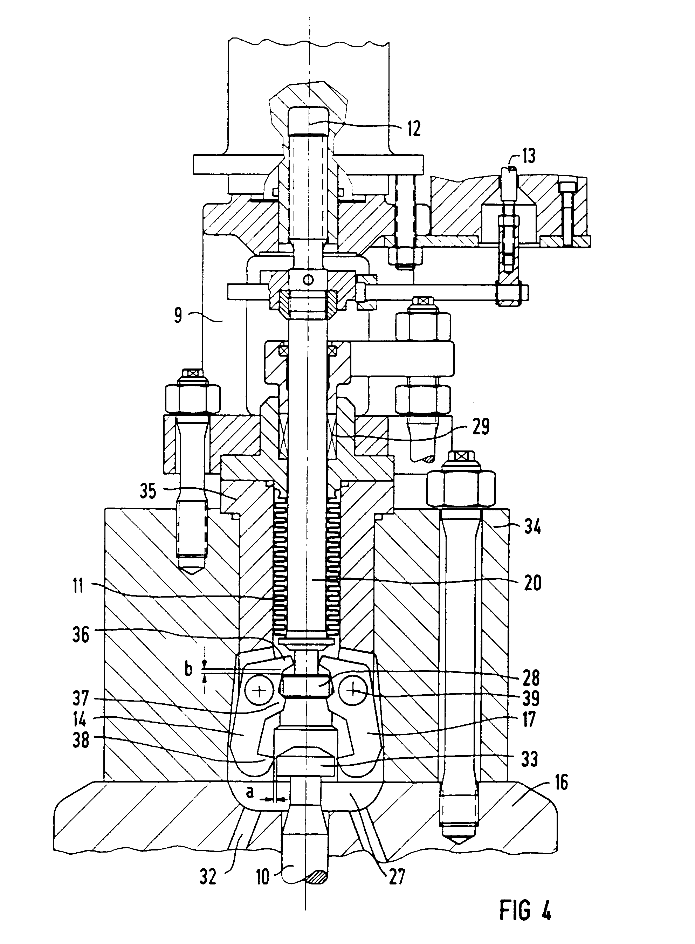

In FIG 4 ist in einem Längsschnitt in vergrößertem Maßstab der an den Steuerzylinder 16 anschließende Teil der Offenhaltevorrichtung 9 mit der in dem Druckgehäuse 34 angeordneten Greifvorrichtung 14 dargestellt. Die Greifvorrichtung 14 hat Fangklinken 17, die in einer Auf-Stellung dargestellt sind. In der Auf-Stellung ist die Kolbenstange 10 zwischen den Fangklinken 17 frei beweglich. Die Fangklinken 17 haben jeweils einen Greifbereich 38 mit dem der Greifkopf 33 des Endes 15 der Kolbenstange 10 hintergriffen werden kann. Weiterhin hat jede Fangklinke 17 einen Drehpunkt 39, um den die Fangklinke 17 drehbar ist. Oberhalb des Drehpunktes 39 hat jede Fangklinke 17 einen oberen Vorsprung 36 und unterhalb des Drehpunktes 39 einen unteren Vorsprung 37. Zwischen dem oberen Vorsprung 36 und dem unteren Vorsprung 37 ist der Schaltnocken 28 der Spindel 20 angeordnet. Durch einen Druck des Schaltnockens 28 gegen den unteren Vorsprung 37 wird jede Fangklinke 17 in eine Auf-Stellung bewegt. Der Schaltnocken 28 hat zwischen dem oberen Vorsprung 36 und dem unteren Vorsprung 37 einen Hub b der deutlich geringer als der Abstand zwischen oberem Vorsprung 36 und unterem Vorsprung 37 ist. Dadurch wird eine Schwenkung der Fangklinken schon durch eine geringe Verschiebung der Spindel 20 erreicht. Bei einer Bewegung der Spindel 20 weg von dem Strömungskanal, d.h. bei einer Aufwärtsbewegung, drückt der Schaltnocken 28 gegen den oberen Vorsprung 36. Hierdurch werden die Fangklinken 17 in eine Zu-Stellung geschwenkt, in der sie das Ende 15 der Kolbenstange 10 umfassen, so daß diese gegen eine Bewegung in Richtung des Strömungskanals gesichert ist.

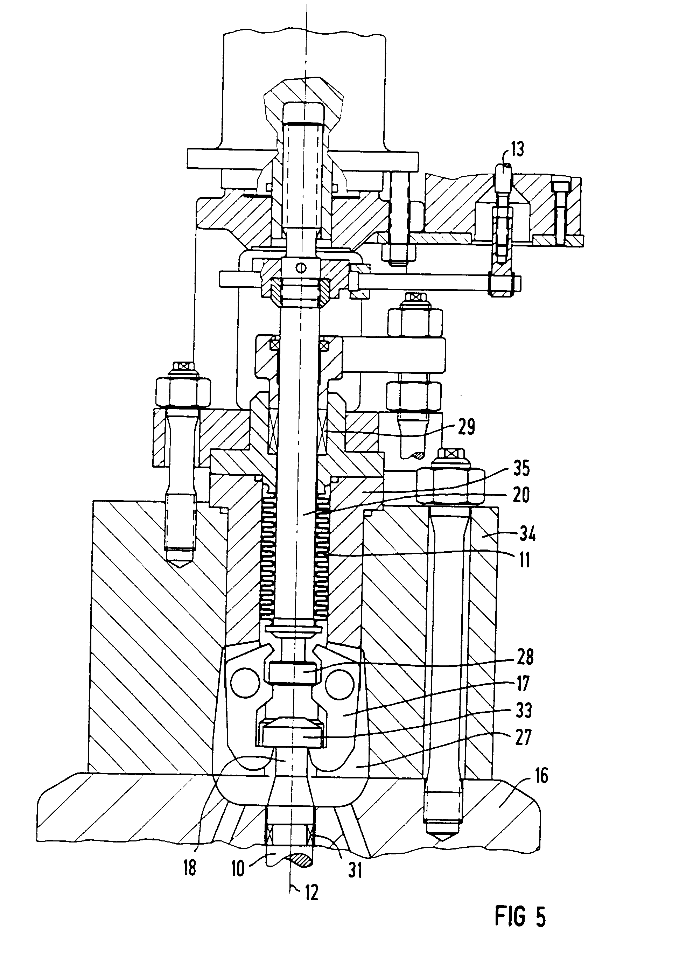

In FIG 5 ist der an den Steuerzylinder 16 angrenzende Bereich der Offenhaltevorrichtung 9 in vergrößertem Maßstab dargestellt, wobei die Fangklinken 17 in der Zu-Stellung gezeigt sind. Um eine Druckabsicherungsfunktion der Druckarmatur 1 zu gewährleisten, werden die Fangklinken 17 in die Zu-Stellung bewegt, wenn ein Druckentlastungsfall vorliegt, d.h. das Sicherheitsventil 5 und das zusätzliche Ventil 6 mittels der motorgetriebenen Steuerventile 21 geöffnet bzw. offengehalten werden. Dies ist vorteilhaft auch für wiederkehrende Funktionsprüfungen der Druckarmatur 1. Um eine Bewegung der Fangklinken 17 in die Zu-Stellung richtig zu steuern, sind entsprechende nicht dargestellte elektrische Verriegelungen bzw. andere Maßnahmen vorgesehen. Ein Einschalten des Antriebs 19 erfolgt in Verbindung mit einem Einschalten des motorgetriebenen Steuerventils 21 zur Druckentlastung und zwar zeitverzögert, 2 sec. nach Einschalten der Steuerventile 21 beim Öffnen des Sicherheitsventils 5 und 5 sec. vor Einschalten des Steuerventils 21 beim Schließen des Sicherheitsventils 5. Sollte bei verschlossenem Strömungskanal 2 der Antrieb 19 der Offenhaltevorrichtung 9 fehlerhaft eingeschaltet werden, so wird eine Bewegung der Fangklinken 17 in ihre Zu-Stellung auf mechanischem Wege verhindert. Wie in FIG 4 dargestellt, können die Fangklinken 17 nur eine sehr begrenzte Schwenkbewegung über den Spalt a machen, bevor sie seitlich an dem Greifkopf 33 der Kolbenstange 10 zum Anschlag kommen. Die Fangklinken 17 und der Greifkopf 33 sind so ausgelegt, daß eine von der Spindel 20 ausgeübte Kraft, die aufgrund des Kippmomentes des Motorantriebs 19 erzeugt wird, keinen mechanischen Schaden bedingt. Der Motorantrieb 19 wird über ein Zeitglied, das ca. 3 Sekunden nach Beendigung des Spindellaufs aktiv wird, abgeschaltet, so daß ebenfalls eine Beschädigung des Motorantriebs ausgeschlossen ist. Der Leerhub b, den die Spindel zwischen dem oberen Vorsprung 36 und dem unteren Vorsprung 37 zurücklegt, ist so bemessen, daß anhand der Stellungsanzeige 13 erkennbar ist, daß die Fangklinken 17 ihre Auf-Stellung verlassen haben. Selbst wenn die Fangklinken 17 gegen den Greifkopf 33 der Kolbenstange 10 gedrückt werden, ist der mechanische Reibkraftschluß zwischen den Fangklinken 17 und dem Greifkopf 33 gegenüber den in dem Sicherheitsventil 5 auftretenden hydraulischen Kräften deutlich geringer, so daß auch in diesem Fall ein Öffnen des Strömungskanals 2 gewährleistet bleibt.

Bei einem gleichzeitigen Auftreten einer ungewollten Fehlbewegung der Spindel 20, die eine Bewegung der Fangklinken 17 in ihre Zu-Stellung bedingt und einem Öffnen des Strömungskanals 2 in einem Druckabsicherungsfall eines Druckbehälters, wobei die Kolbenstange 10 von dem Strömungskanal 2 wegbewegt wird, können gegebenenfalls die Fangklinken 17 in ihre Zu-Stellung gelangen und dadurch die Kolbenstange 10 umfassen, so daß ein Schließen des Strömungskanals 2 ungewollt verhindert wird. In diesem Fall übernimmt das zusätzliche Ventil 6 die Druckabsicherung des Druckbehälters, so daß die Sicherheit des Druckbehälters weiterhin gewährleistet bleibt. Durch geringfügige Änderungen an dem Steuerzylinder 16 ist eine Nachrüstung des in FIG 2 dargestellten Tandem-Ventils mit einer Offenhaltevorrichtung 9 ermöglicht, wobei funktionsrelevante Dimensionen wie die Größe des Steuerraums 25 nicht verändert werden müssen, so daß neue Funktionsnachweise nicht erforderlich sind. Die Beibehaltung der funktionsrelevanten Dimensionen erfolgt beispielsweise über die in FIG 3 dargestellten Ausgleichsbohrungen 32 sowie den hierdurch mit dem Steuerraum 25 verbundenen Nebensteuerraum 27, wodurch das zusätzliche von der Kolbenstange 10 beanspruchte Volumen ausgeglichen wird, so daß das Gesamtsteuerraum-Volumen unverändert bleibt. Die Offenhaltevorrichtung 9 ist für verschiedene Durchmesser des Steuerzylinders 16 anpaßbar. Besonders einfach läßt sich die Offenhaltevorrichtung 9 an einen jeweiligen maximalen Hub der Kolbenstange 10, d.h. des Schließorgans 7, dadurch anpassen, daß die Höhe des Druckgehäuses 34, in dem die Greifvorrichtung 14 angeordnet ist, verändert wird. Sämtliche anderen Teile, wie Spindel 20, Fangklinken 17, Stellungsanzeige 13 der Fangklinken 17 sowie Antrieb 19 der Spindel 20 können unverändert bleiben.

Die Erfindung zeichnet sich durch ein Sicherheitsventil mit einer Offenhaltevorrichtung aus, durch welche ein Offenhalten des Sicherheitsventils insbesondere zur Druckentlastung eines Druckbehälters bis auf einen drucklosen Zustand sicher gewährleistet ist. Die Offenhaltevorrichtung eignet sich besonders für Sicherheitsventile, die nach dem Entlastungskonzept arbeiten und hierzu einen Steuerraum aufweisen, der eine Hauptachse hat, entlang derer sich Ventilkomponenten, beispielsweise ein Kolben oder eine Kolbenstange, bewegen. Eine Kolbenstange kann beispielsweise so verlängert werden, daß sie mit einem Ende druckdicht aus dem Steuerzylinder herausgeführt ist. Mit einer Greifvorrichtung der auf den Steuerzylinder aufgesetzten Offenhaltevorrichtung ist diese verlängerte Kolbenstange festhaltbar, wodurch ein Schließen des Sicherheitsventils unterbunden wird. Durch einen fremdmediumsteuerbaren Antrieb der Offenhaltevorrichtung kann das Greifen und Festhalten der Kolbenstange unabhängig von der sonstigen Funktionsweise des Sicherheitsventils gesteuert werden. Insbesondere eignet sich das Sicherheitsventil mit Offenhaltevorrichtung in einem Tandem-Ventil zur Druckentlastung und Druckabsicherung eines Reaktordruckbehälters eines Druckwasserreaktors.

## Patentansprüche

1. Sicherheitsventil (5), das nach dem Entlastungsprinzip arbeitet, mit einem Strömungskanal (2), einem Schließorgan (7), durch welches der Strömungskanal (2) verschließbar und offenhaltbar ist, einem Steuerzylinder (16), in dem ein Druck aufbringbar ist, so daß das Schließorgan (7) den Strömungskanal (2) verschließt, welcher Druck reduzierbar ist, wodurch eine den Strömungskanal (2) öffnende Bewegung des Schließorgans (7) erzeugbar ist, und einer Kolbenstange (10), die in dem Steuerzylinder (16) geführt ist, wobei das Schließorgan (7) und die Kolbenstange (10) entlang einer Hauptachse (12) des Sicherheitsventils (5) verschieblich angeordnet sind und miteinander derart in Verbindung stehen, daß bei einer Verschiebung des Schließorgans (7) eine gleichgerichtete Verschiebung der Kolbenstange (10) erfolgt,
**dadurch gekennzeichnet,** daß eine Offenhaltevorrichtung (9) vorhanden ist, welche eine Greifvorrichtung (14) aufweist und auf dem Steuerzylinder (16) angeordnet ist, daß die Kolbenstange (10) mit ihrem, dem Strömungskanal (2) abgewandten Ende (15) aus dem Steuerzylinder (16) herausragt, und daß die Greifvorrichtung (14) an diesem Ende (15) der Kolbenstange (10) angeordnet und in eine Fangstellung bewegbar ist, in der sie dieses Ende (15) faßt und die Kolbenstange (10) festhält, so daß das Schließorgan (7) in einer den Strömungskanal (2) offenhaltenden Position verbleibt.

2. Sicherheitsventil (5) nach Anspruch 1, bei dem die Greifvorrichtung (14) zumindest eine Fangklinke (17) hat.

3. Sicherheitsventil (5) nach Anspruch 2, bei dem die Fangklinke (17) senkrecht zur Hauptachse (12) um einen Winkel von bis zu 20°, insbesondere bis zu 15°, schwenkbar ist.

4. Sicherheitsventil (5) nach Anspruch 2 oder 3, bei dem die Offenhaltevorrichtung (9) eine entlang der Hauptachse (12) verschiebliche Spindel (20) hat, die bei einer Verschiebung in Richtung des Strömungskanals (2) die Fangklinke (17) in eine Offenposition und bei einer Verschiebung weg von dem Strömungskanal die Fangklinke (17) in die Fangposition bewegt.

5. Sicherheitsventil (5) nach einem der Ansprüche 2 bis 4, bei dem das Ende (15) der Kolbenstange (10) eine Einbuchtung (18) zum Eingreifen der Fangklinke (17) hat.

6. Sicherheitsventil (5) nach Anspruch 5, bei dem das Ende (15) in Form eines Greifkopfes ausgebildet ist, welcher konisch mit einer Verjüngung in Richtung des Strömungskanals (2) verläuft.

7. Sicherheitsventil (5) nach einem der vorhergehenden Ansprüche, bei dem die Offenhaltevorrichtung (9) einen zeitabhängig schaltbaren Antrieb (19) zum Öffnen und Schließen der Greifvorrichtung (14) hat.

8. Vorrichtung mit einem Sicherheitsventil (5) nach einem der vorhergehenden Ansprüche, in einer Druckarmatur (1) mit einem zusätzlichen Ventil (6), welches einen zusätzlichen Strömungskanal (22) hat, wobei das Sicherheitsventil (5) und das zusätzliche Ventil (6) in Reihe angeordnet sind, und die Strömungskanäle (2, 22) ineinander übergehen.

9. Vorrichtung nach Anspruch 8, bei der die Druckarmatur (1) ein Druckentlastungs-Tandemventil für einen Druckbehälter eines Kernreaktors, insbesondere eines Druckwasserreaktors, ist.

10. Vorrichtung nach Anspruch 8, bei der die Druckarmatur (1) ein kombiniertes Druckentlastungs- und Druckabsicherungs-Tandemventil für einen Druckbehälter eines Kernreaktors, insbesondere eines Druckwasserreaktors, ist.

11. Vorrichtung nach Anspruch 9, bei der die Druckarmatur (1) ein kombiniertes Druckentlastungs- und Druckabsicherungs-Tandemventil für einen Druckhalter eines Druckwasserreaktors ist.

12. Verfahren zum Betrieb eines Sicherheitsventils (5) nach einem der vorhergehenden Ansprüche, das mit einem zusätzlichen Ventil (6) in Reihe angeordnet ist,
**dadurch gekennzeichnet,** daß die Greifvorrichtung (14) in eine Fangstellung bewegt wird, in der sie das Ende (15) der Kolbenstange (10) faßt und die Kolbenstange (10) festhält, so daß das Schließorgan (7) in einer den Strömungskanal (2) offenhaltenden Position verbleibt, wenn das Sicherheitsventil (5) und das zusätzliche Ventil (6) gleichzeitig geöffnet sind.

## Claims

1. Safety valve (5) which operates according to the relief principle, having a flow channel (2), a closing element (7) by which the flow channel (2) can be closed and kept open, a control cylinder (16) in which a pressure can be applied so that the closing element (7) closes the flow channel (2), which pressure can be reduced, as a result of which a movement of the closing element (7) that opens the flow channel (2) can be generated, and a piston rod (10) which is guided in the control cylinder (16), with the closing element (7) and the piston rod (10) being arranged so as to be movable along a main axis (12) of the safety valve (5) and being connected to each other in such a way that when the closing element (7) is moved, a rectified movement of the piston rod (10) takes place,
characterised in that there is a hold-open device (9), which has a gripping device (14) and is arranged on the control cylinder (16), in that the end (15) of the piston rod (10) that faces away from the flow channel (2) protrudes from the control cylinder (16), and in that the gripping device (14) is arranged at this end (15) of the piston rod (10) and is movable into an arresting position in which it holds this end (15) and secures the piston rod (10), so that the closing element (7) remains in a position which holds the flow channel (2) open.

2. Safety valve (5) according to claim 1, in which the gripping device (14) has at least one arresting catch (17).

3. Safety valve (5) according to claim 2, in which the arresting catch (17) is pivotable at right angles to the main axis (12) about an angle of up to 20°, in particular up to 15°.

4. Safety valve (5) according to claim 2 or 3, in which the hold-open device (9) has a spindle (20) which is movable along the main axis (12) and in the event of a movement in the direction of the flow channel (2) moves the arresting catch (17) into an open position and in the event of a movement away from the flow channel moves the arresting catch (17) into the arresting position.

5. Safety valve (5) according to one of claims 2 to 4, in which the end (15) of the piston rod (10) has an indentation (18) for the engagement of the arresting catch (17).

6. Safety valve (5) according to claim 5, in which the end (15) is constructed in the form of a gripping head, which extends conically with a taper in the direction of the flow channel (2).

7. Safety valve (5) according to one of the preceding claims, in which the hold-open device (9) has a drive (19) which can be operated in a time-controlled manner for opening and closing the gripping device (14).

8. Device having a safety valve (5) according to one of the preceding claims, in a pressure fitting (1) having an additional valve (6), which has an additional flow channel (22), with the safety valve (5) and the additional valve (6) being arranged in series and the flow channels (2, 22) merging into each other.

9. Device according to claim 8, in which the pressure fitting (1) is a pressure-relief tandem valve for a pressure vessel of a nuclear reactor, in particular a pressurised-water reactor.

10. Device according to claim 8, in which the pressure fitting (1) is a combined pressure-relief and pressure-protection tandem valve for a pressure vessel of a nuclear reactor, in particular a pressurised-water reactor.

11. Device according to claim 9, in which the pressure fitting (1) is a combined pressure-relief and pressure-protection tandem valve for a pressure vessel of a pressurised-water reactor.

12. Method for operating a safety valve (5) according to one of the preceding claims, which safety valve is arranged in series with an additional valve (6), characterised in that the gripping device (14) is moved into an arresting position in which it holds the end (15) of the piston rod (10) and secures the piston rod (10), so that the closing element (7) remains in a position which holds the flow channel (2) open when the safety valve (5) and the additional valve (6) are opened simultaneously.

## Revendications

1. Soupape de sécurité (5) fonctionnant selon le principe de la détente, comprenant un canal d'écoulement (2), un élément de fermeture (7) grâce auquel le canal d'écoulement (2) peut être fermé et maintenu ouvert, un cylindre de commande (16) dans lequel on peut appliquer une pression de manière à ce que l'élément de fermeture (7) ferme le canal d'écoulement (2), laquelle pression peut être réduite, grâce à quoi on peut produire un mouvement de l'élément de fermeture (7) qui ouvre le canal d'écoulement (2), et une tige de piston (10) qui est guidée dans le cylindre de commande (16), l'élément de fermeture (7) et la tige de piston (10) étant situés de manière mobile le long d'un axe principal (12) de la soupape de sécurité (5) et étant en relation l'un avec l'autre de telle manière que lors d'un déplacement de l'élément de fermeture (7), il se produit un déplacement de la tige de piston (10) dans la même direction, caractérisée en ce qu'il existe un dispositif de maintien de l'ouverture (9) qui comprend un dispositif de saisie (14) et est situé sur le cylindre de commande (16), en ce que la tige de piston (10) dépasse du cylindre de commande (16) avec son extrémité (15) éloignée du canal d'écoulement (2), et en ce que le dispositif de saisie (14) est situé à cette extrémité (15) de la tige de piston (10) et peut être déplacé dans une position d'arrêt dans laquelle il saisit cette extrémité (15) et retient la tige de piston (10), de manière à ce que l'élément de fermeture (7) reste dans une position qui maintient ouvert le canal d'écoulement (2).

2. Soupape de sécurité (5) selon la revendication 1, dans laquelle le dispositif de saisie (14) possède au moins un cliquet d'arrêt (17).

3. Soupape de sécurité (5) selon la revendication 2, dans laquelle le cliquet d'arrêt (17) peut pivoter perpendiculairement à l'axe principal (12) suivant un angle pouvant mesurer jusqu'à 20°, de préférence jusqu'à 15°.

4. Soupape de sécurité (5) selon l'une des revendications 2 ou 3, dans laquelle le dispositif de maintien de l'ouverture (9) possède une tige (20) mobile le long de l'axe principal (12) qui, lors d'un déplacement en direction du canal d'écoulement (2), déplace le cliquet d'arrêt (17) dans une position ouverte et, lors d'un déplacement l'éloignant du canal d'écoulement, déplace le cliquet d'arrêt (17) dans la position d'arrêt.

5. Soupape de sécurité (5) selon l'une des revendications 2 à 4, dans laquelle l'extrémité (15) de la tige de piston (10) est pourvue d'une indentation (18) permettant l'enclenchement du cliquet d'arrêt (17).

6. Soupape de sécurité (5) selon la revendication 5, dans laquelle l'extrémité (15) est exécutée sous la forme d'une tête de saisie conique présentant un rétrécissement en direction du canal d'écoulement (2).

7. Soupape de sécurité (5) selon l'une des revendications précédentes, dans laquelle le dispositif de maintien de l'ouverture (9) possède une commande (19) pouvant être commutée en fonction du temps en vue de l'ouverture et de la fermeture du dispositif de saisie (14).

8. Dispositif comprenant une soupape de sécurité (5) selon l'une des revendications précédentes, dans un appareil de robinetterie sous pression (1) comprenant une soupape supplémentaire (6) qui est pourvue d'un canal d'écoulement supplémentaire (22), la soupape de sécurité (5) et la soupape supplémentaire (6) étant situées en série et les canaux d'écoulement (2, 22) se confondant.

9. Dispositif selon la revendication 8, dans lequel l'appareil de robinetterie sous pression (1) est une soupape tandem de détente pour une cuve sous pression d'un réacteur nucléaire, notamment d'un réacteur à eau sous pression.

10. Dispositif selon la revendication 8, dans lequel l'appareil de robinetterie sous pression (1) est une soupape tandem combinée de détente et de sécurité pour une cuve sous pression d'un réacteur nucléaire, notamment d'un réacteur à eau sous pression.

11. Dispositif selon la revendication 9, dans lequel l'appareil de robinetterie sous pression (1) est une soupape tandem combinée de détente et de sécurité pour un dispositif de maintien de la pression d'un réacteur à eau sous pression.

12. Procédé pour faire fonctionner une soupape de sécurité (5) selon l'une des revendications précédentes qui est située en série avec une soupape supplémentaire (6), caractérisé en ce que le dispositif de saisie (14) est déplacé dans une position d'arrêt dans laquelle il saisit l'extrémité (15) de la tige de piston (10) et retient la tige de piston (10), de manière à ce que l'élément de fermeture (7) reste dans une position qui maintient le canal d'écoulement (2) ouvert lorsque la soupape de sécurité (5) et la soupape supplémentaire (6) sont ouvertes simultanément.
